Europäisches Patentamt

European Patent Office

Office européen des brevets

(19)

(11) Veröffentlichungsnummer: **0 008 678**
**B1**

(12) **EUROPÄISCHE PATENTSCHRIFT**

(45) Veröffentlichungstag der Patentschrift:
**27.01.82**

(51) Int. Cl.³: **B 60 T 13/28, F 17 C 5/06**

(21) Anmeldenummer: **79102744.4**

(22) Anmeldetag: **01.08.79**

(54) **Druckluftanlage für Fahrzeuge.**

(30) Priorität: **30.08.78  DE 2837806**

(43) Veröffentlichungstag der Anmeldung:
**19.03.80 Patentblatt 80/6**

(45) Bekanntmachung des Hinweises auf die Patenterteilung:
**27.01.82 Patentblatt 82/4**

(84) Benannte Vertragsstaaten:
**BE CH FR GB IT NL SE**

(56) Entgegenhaltungen:
**DE-A-2 304 720**
**DE-A1-2 749 161**
**DE-B-1 930 161**
**DE-B2-2 453 814**
**DE-U-1 965 661**

(73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Görge, Werner, Dr., Pötschenerstrasse 21, D-8035 Gauting (DE)**
Erfinder: **Wille, Hans Günter, Brennerstrasse 24, D-8031 Gröbenzell (DE)**

BUNDESDRUCKEREI BERLIN

Druckluftanlage für Fahrzeuge

Die Erfindung bezieht sich auf eine Druckluftanlage für Fahrzeuge, insbesondere als Bremsanlage für Kraftfahrzeuge mit einem Luftverdichter und an ein sogenanntes Mehrkreisschutzventil angeschlossenen Druckluftvorratsbehältern.

Bei solchen bekannten Druckluftanlagen werden die Vorratsbehälter im Regelfall nur bei laufender Antriebsmaschine des Fahrzeugs aufgefüllt, so daß dann, wenn die Fahrzeuge abgestellt werden, der Druck .infolge von Leckverlusten in den Vorratsbehältern stetig abnimmt und unter einen geringst zulässigen Betriebsdruck abfällt. Wird eine Druckluftanlage in einem solchen Fahrzeug als Bremsanlage verwendet, dann ist ein solches, längere Zeit abgestelltes Fahrzeug nicht mehr betriebsbereit, und es ist bewegungsunfähig, wenn in dem Fahrzeug eine sogenannte Federspeicherbremse eingebaut ist, die nur bei entsprechend hohem Betriebsdruck gelöst werden kann. Soll ein solches Fahrzeug also in Betrieb genommen werden, so muß die Antriebsmaschine erst eine nicht unwesentliche Zeitdauer laufen und dabei den Kompressor antreiben, um den erforderlichen Mindestbetriebsdruck in den Vorratsbehältern zu erzeugen und damit das Fahrzeug wieder bewegungsfähig zu machen.

Es ist Aufgabe der vorliegenden Erfindung, eine gattungsgemäße Druckluftanlage so auszubilden, daß eine längere Zeit abgestelltes Fahrzeug in kürzester Zeit, d. h. innerhalb weniger Sekunden betriebsbereit ist, so daß es auch für Einsätze in Notsituationen wie z. B. Feuerwehreinsätze geeignet ist.

Aus dem DE-GM 1 968 661 ist eine Preßluft-Füllvorrichtung bekannt, bei der an einem Preßluftbehälter mit hohem Druckniveau ein Absperrventil, ein Druckminderventil sowie ein Hochdruckmesser hintereinander angebracht sind. Das in der vorliegenden Anmeldung angesprochene Problem wird dort nicht behandelt.

Aus der DE-OS 2 749 161 ist ein pneumatisches Lokomotiv-Bremssystem bekannt, welches zwei Druckluftbehälter aufweist, die alternativ über ein Pendelventil an die Arbeitszylinder der Lokomotivbremse anschließbar sind. Auch in dieser Druckschrift findet sich kein Hinweis auf die Lösung der oben geschilderten Aufgabe.

Die gestellte Aufgabe wird erfindungsgemäß dadurch gelöst, daß in der vom Luftverdichter zum Mehrkreisschutzventil führenden Versorgungsleitung ein überdruckgesteuertes Zweiwegventil liegt, dessen zweiter Weg von einem Hochdruckspeicher über ein schnell öffnendes Absperrventil und ein Druckminderventil herführt.

Der Hauptvorteil der erfindungsgemäßen Einrichtung besteht darin, daß dann, wenn der Druck in den Vorratsbehältern unter den zulässigen Mindestbetriebsdruck abgefallen ist und das Fahrzeug in Betrieb genommen werden soll, die Vorratsbehälter mittels des schnell öffnenden Absperrventils aus dem Hochdruckspeicher in kürzester Zeit auf das erforderliche Mindestniveau des Betriebsdrucks gebracht werden können, ohne daß hierzu erst der Kompressor eine längere Zeitdauer arbeiten müßte.

Das überdruckgesteuerte Zweiwegventil gibt automatisch den Weg vom Hochdruckspeicher zu dem Mehrkreisschutzventil frei, wenn das schnell öffnende Absperrventil geöffnet wurde und die vom Verdichter kommende Versorgungsleitung drucklos ist.

Bei einer bevorzugten Ausführungsform der Erfindung soll das Produkt aus Druck und Volumen des Hochdruckspeichers größer sein als das Produkt aus Gesamtvolumen der Vorratsbehälter und ihrem Betriebsdruck, so daß die Kapazität des Hochdruckspeichers für mehr als eine Inbetriebnahme der Druckluftanlage bei vorheriger längerer Betriebsruhe ausreicht.

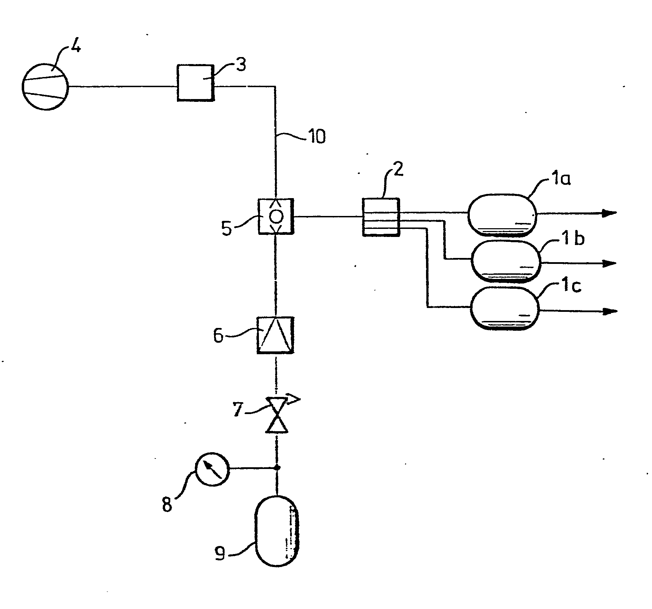

Anhand der beigefügten Zeichnung wird die Erfindung im Rahmen eines Ausführungsbeispiels erläutert.

In der Zeichnung ist eine Druckluftbremsanlage für Fahrzeuge dargestellt, mit einem Luftverdichter 4, von dem aus eine Versorgungsleitung 10 zu einem Mehrkreisschutzventil 2 führt. An das Mehrkreisschutzventil 2 sind Vorratsbehälter 1a, 1b, 1c angeschlossen, von denen jeweils Druckluftleitungen zu den nicht eingezeichneten Druckluftbremsgeräten des Fahrzeugs führen. Das Mehrkreisschutzventil 2 hat die Wirkung, daß dann, wenn in einem der Vorratsbehälter 1a, 1b oder 1c der Druck — etwa infolge eines Lecks — unzulässig weit abfällt, die Verbindung von diesem Vorratsbehälter zu den anderen Vorratsbehältern und zur Versorgungsleitung 10 unterbrochen wird.

Zwischen dem Druckregler 3 und dem Mehrkreisschutzventil 2 liegt in der Versorgungsleitung 10 ein vom jeweiligen Überdruck in der Versorgungsleitung 10 bzw. in der Zweigleitung ( = zweiter Weg) gesteuertes Zweiwegventil 5. Der zweite Weg führt von einem Hochdruckspeicher 9, der vorzugsweise als handelsübliche Preßluftflasche ausgebildet ist, über ein schnell öffnendes Absperrventil 7 und als Druckminderventil 6 her. Zwischen dem Hochdruckspeicher 9 und dem Absperrventil 7 liegt in der Zweigleitung ein Manometer 8, um ständig den im Hochdruckspeicher 9 herrschenden Druck überwachen zu können.

Ausgehend von einem Zustand der Druckluftanlage, in dem der Luftverdichter 4 nicht arbeitet, und in dem der Vorratsdruck in den Vorratsbehältern 1a, 1b und 1c wegen langen Stillstandes unter das zulässige Mindestniveau abgefallen ist, wird die Anlage dadurch in kürzester Zeit betriebsbereit gemacht, daß das Absperrventil 7 geöffnet wird. Die Öffnung erfolgt vorzugsweise von Hand, es kann jedoch auch eine Fernbetätigung, etwa vom Fahrersitz eines Fahrzeugs aus, vorgesehen sein. Durch das Öffnen des Absperrventils 7 kann Hochdruckluft aus dem Hochdruckspeicher 9 durch die Zweigleitung über das Zweiwegventil 5 und das Mehrkreisschutzventil 2 zu den Vorratsbehältern 1a, 1b, 1c strömen und diese auf das Betriebsdruckniveau bringen. Die aus dem Hochdruckspeicher 9 strömende Hochdruckluft wird durch einen Druckminderer 6 in der Zweigleitung auf das höchstzulässige Betriebsdruckniveau gebracht. Druckluftanlagen der beschriebenen Art werden vorzugsweise bei einem Betriebsdruck unterhalb von 20 bar betrieben.

## Patentansprüche

1. Druckluftanlage für Fahrzeuge, insbesondere als Bremsanlage für Kraftfahrzeuge mit einem Luftverdichter (4) und an ein sogenanntes Mehrkreisschutzventil (2) angeschlossenen Druckluftvorratsbehältern (1a, 1b, 1c), dadurch gekennzeichnet, daß in der vom Luftverdichter (4) zum Mehrkreisschutzventil (2) führenden Versorgungsleitung (10) ein überdruckgesteuertes Zweiwegventil (5) liegen, dessen zweiter Weg von einem Hochdruckspeicher (9) über ein schnell öffnendes Absperrventil (7) und ein Druckminderventil (6) herführt.

2. Druckluftanlage nach Anspruch 1, dadurch gekennzeichnet, daß das Produkt aus Druck und Volumen des Hochdruckspeichers (9) größer ist als das Produkt aus Gesamtvolumen der Vorratsbehälter (1a, 1b, 1c) und ihrem Betriebsdruck.

## Claims

1. A compressed air installation for vehicles, more particularly as a braking installation for motor vehicles, comprising an air compressor (4) and compressed air reservoirs (1a, 1b, 1c) connected to a multi-circuit protective valve (2), characterised in that the supply line (10) leading from the air compressor (4) to the multi-circuit protective valve (2) contains a two-way valve (5) which is actuated by positive pressure and the second way of which leads from a high-pressure accumulator (9) via a quick-opening shut-off valve (7) and a pressure reducing valve (6).

2. A compressed air installation according to claim 1, characterised in that the product of the pressure and volume of the high-pressure accumulator (9) is greater than the product of the total volume of the reservoirs (1a, 1b, 1c) and their working pressure.

## Revendications

1. Installation d'air comprimé pour véhicules, notamment en tant qu'installation de freinage pour véhicules, automobiles avec un compresseur d'air (4) et des réservoirs de stockage d'air comprimé (1a, 1b, 1c) raccordés à une soupape de protection (2) dite à plusieurs circuits, caractérisée en ce que, dans la conduite d'alimentation (10) allant du compresseur d'air (4) à la soupape de protection à plusieurs circuits (2), se trouve une soupape à deux voies (5) commandée par surpression dont la seconde voie provient d'un accumulateur haute pression (9) par l'intermédiaire d'une soupape d'arrêt à ouverture rapide (7) et d'une soupape de réduction de pression (6).

2. Installation d'air comprimé selon la revendication 1, caractérisée en ce que le produit de la pression et du volume de l'accumulateur haute pression (9) est supérieur au produit du volume total des réservoirs de stockage (1a, 1b, 1c) et de leur pression de service.